# EUROPÄISCHE PATENTSCHRIFT

(11) **EP 3 507 095 B1**
(45) Veröffentlichungstag und Bekanntmachung des Hinweises auf die Patenterteilung: **09.12.2020**
(21) Anmeldenummer: 17754674.4
(22) Anmeldetag: 11.08.2017
(51) Int. Cl.: B41F 15/08, B41F 15/30, B41F 15/32, B41F 17/00, B41F 17/08

(54) **BEARBEITUNGSMASCHINE MIT MEHREREN BEARBEITUNGSSTATIONEN ZUM BEARBEITEN VON KÖRPERN**
PROCESSING MACHINE WITH STATIONS FOR PROCESSING BODIES
MACHINE DE TRAITEMENT AVEC PLUSIEURS STATIONS DE TRAITEMENT DE CORPS

(30) Priorität: 01.09.2016 DE 102016216514; 13.09.2016 DE 102016217376
(43) Veröffentlichungstag der Anmeldung: 10.07.2019
(73) Patentinhaber: Koenig & Bauer Kammann GmbH, 32584 Löhne (DE)
(72) Erfinder: JERETZKY, Gerald, 32609 Hüllhorst (DE); STEFFEN, Volker, 32051 Herford (DE)
(74) Vertreter: Koenig & Bauer AG
(86) Internationale Anmeldenummer: PCT/EP2017/070443
(87) Internationale Veröffentlichungsnummer: WO 2018/041604

(56) Entgegenhaltungen:
- EP-A1- 2 995 453
- EP-A2- 0 425 967
- DE-A1- 4 416 974
- DE-B3-102010 056 123

## Beschreibung

Die Erfindung betrifft eine Bearbeitungsmaschine mit mehreren Bearbeitungsstationen zum Bearbeiten von Körpern gemäß Anspruch 1.

Unter dem Begriff "Körper" soll ein dreidimensionales Objekt verstanden werden, das eine Masse hat und einen Raum einnimmt. Körper bestehen aus Materie. Festkörper haben eine feste Form und können durch Grenzflächen beschrieben werden. Die vorliegende Erfindung bezieht sich vornehmlich auf eine Bearbeitungsmaschine zum Bearbeiten von Körpern mit steifen und/oder starren Grenzflächen, vorzugsweise von Rundkörpern und/oder Hohlkörpern jeweils mit gekrümmten und/oder gewölbten und/oder balligen Grenzflächen, insbesondere von jeweils als ein Behälter zu verwendenden Hohlkörpern, wobei das jeweilige Bearbeiten dieser Grenzflächen vorzugsweise in deren Dekoration, insbesondere in deren Bedrucken besteht. Derartige Körper werden z. B. als Verpackung, insbesondere als Primärverpackung für eine bestimmte, also zuvor festgelegte Menge eines z. B. flüssigen oder pastösen oder pulverförmigen Packgutes verwendet, wobei der betreffende Körper das Packgut zumindest teilweise, vorzugsweise vollständig umschließt. Die mit der Bearbeitungsmaschine zu bearbeitenden Körper sind z. B. jeweils als eine Flasche oder als ein Flakon oder als ein Becher oder als eine Kartusche oder als eine Tube ausgebildet. Die zu bearbeitenden z. B. einteilig oder mehrteilig gefertigten Körper sind teilweise oder vollständig z. B. jeweils aus Glas oder aus einer Keramik oder aus einem Kunststoff oder aus einem metallischen Werkstoff ausgebildet.

Durch die EP 2 995 453 A1 ist eine Transportvorrichtung für in einer Bearbeitungsmaschine zu bearbeitende und dort bearbeitete Objekte bekannt, mit einer ersten Fördereinrichtung und einer zweiten Fördereinrichtung, wobei für diese Objekte hinsichtlich der ersten Fördereinrichtung ein erster Förderweg und hinsichtlich der zweiten Fördereinrichtung ein zweiter Förderweg jeweils starr vorgegeben sind, wobei eine im zweiten Förderweg der zweiten Fördereinrichtung angeordnete Übergabeposition einer Übergabeeinrichtung zur Übergabe von Objekten von der ersten Fördereinrichtung an die zweite Fördereinrichtung und von der zweiten Fördereinrichtung an die erste Fördereinrichtung vorgesehen ist, wobei die zweite Fördereinrichtung eine Halteeinrichtung zum Halten von jeweils einem der entlang des zweiten Förderweges zu transportierenden Objekte aufweist, wobei von der ersten Fördereinrichtung entlang des ersten Förderweges bewegte Objekte kontinuierlich bewegt sind und die Halteeinrichtung der zweiten Fördereinrichtung entlang des zweiten Förderweges diskontinuierlich bewegt ist, wobei die zu transportierenden Objekte jeweils als ein jeweils eine Längsachse aufweisender Hohlkörper ausgebildet sind, wobei die jeweilige Längsachse der zu transportierenden Objekte im ersten Förderweg und im zweiten Förderweg jeweils liegend angeordnet ist.

Durch die EP 0 425 967 A2 ist ein Siebdruckverfahren zum Bedrucken von Objekten mit wenigstens einem Abschnitt bekannt, der eine nicht kreisrunde Querschnittsform aufweist, unter Verwendung einer Vorrichtung mit wenigstens einer Halterung für das Objekt, die um eine nicht im Objektmittelpunkt liegende Achse schwenkbar angeordnet ist, einer Siebdruckschablone und einer dieser gegenüber relativ verschiebbaren Rakel, wobei die Halterung für das Objekt in eine erste Position gebracht wird und das zu bedruckende Objekt ebenfalls in eine der Position der Halterung entsprechende Position gebracht wird derart, dass die längere Querschnittsachse des zu bedruckenden Abschnitts des Objektes im Wesentlichen horizontal verläuft, und das Objekt in dieser Position von der Halterung aufgenommen wird, worauf Halterung und Objekt eine erste Schwenkbewegung ausführen, wodurch Halterung und Objekt in eine Anfangsposition gebracht werden, in welcher eine zweite Schwenkbewegung beginnt, die der ersten Schwenkbewegung entgegengerichtet ist, wobei zumindest während eines Teilabschnittes dieser zweiten Schwenkbewegung das Bedrucken des Objektes erfolgt und so Halterung und Objekt nach Erreichen ihrer Endposition am Ende der zweiten Schwenkbewegung eine dritte Schwenkbewegung in Richtung der ersten Schwenkbewegung ausführen derart, dass sich am Ende der dritten Schwenkbewegung Halterung und Objekt wieder in der ersten Position befinden, in welcher dann das bedruckte Objekt von der Halterung entfernt wird.

Durch die DE 43 28 038 A1 ist eine Rollendruckmaschine mit mindestens einem Druckwerk und mindestens einem Rollenwechsler für den fliegenden Rollenwechsel bekannt, wobei in dem Rollenwechsler jeweils eine erste Rolle mit einem ersten Materialbahnwickel zum Drucken abgewickelt wird und gegen jeweils eine zweite Rolle mit einem zweiten Materialbahnwickel ausgetauscht wird, wobei der Rollenwechsler eine Schneide- und Klebvorrichtung zum Verbinden des Anfangs des zweiten Materialbahnwickels mit dem ablaufenden Materialbahnwickel der Materialbahnen aufweist, wobei die erste Rolle auf einem ersten und die zweite Rolle auf einem zweiten fahrerlosen Transportfahrzeug eingespannt ist und wobei die Transportfahrzeuge selbst die für den Klebevorgang mit einem Klebemuster vorbereiteten Rollen in einer Vorbereitungsstation übernehmen.

Durch die nachveröffentlichte DE 10 2015 106 238 A1 ist ein Stauförderer mit einem stationären Führungsmittel und mit einer Anzahl von Werkstückträgern bekannt, wobei an jedem Werkstückträger ein Antrieb und wenigstens ein diesem zugeordnetes Eingriffsmittel vorgesehen ist, welches in Eingriff mit dem Führungsmittel ist, wobei sich das durch den Antrieb angetriebene Eingriffsmittel mit dem Werkstückträger entlang des Führungsmittels bewegt.

Durch die DE 38 26 830 A1 ist eine Lineartransfervorrichtung für Werkstückträger bekannt, mit zumindest einer Führungsschiene, auf welcher der im wesentlichen U-förmigen Querschnitt aufweisende Werkstückträger über mit der Führungsschiene formschlüssig in Eingriff stehende Führungsorgane geführt ist, wobei die Führungsschiene einen Energieversorgungsabschnitt, an welchem der Werkstückträger mit einer Energieleitung angreift, und einen Antriebsabschnitt aufweist, an welchem ein vom Werkstückträger getragenes Antriebsorgan angreift, das von einem im Werkstückträger angeordneten, über die Energieleitung gespeisten Antriebsmotor angetrieben wird, und wobei eine Steuereinrichtung für den Antrieb des Werkstückträgers vorgesehen ist, die zumindest ein an der Stirnseite des Werkstückträgers angeordnetes Schaltorgan aufweist, über welches der Antriebsmotor bei Betätigung des Schaltorganes durch einen auf der Führungsschiene nachfolgenden Werkzeugträger stillsetzbar ist.

Durch die DE 10 2013 112 091 A1 ist eine Vorrichtung zur Aufgabe von Objekten auf eine als kontinuierlich drehendes Karussell mit über den Umfang verteilt angeordneten Behandlungsstationen ausgebildete Behandlungsmaschine und/oder zur Entnahme von Objekten von einer solchen Behandlungsmaschine bekannt, wobei die Vorrichtung mehrere Transporteinrichtungen zum Transportieren jeweils eines Objekts aus einer ersten Übergabeposition in eine zweite Übergabeposition und eine Aufnahmeeinrichtung zum Aufnehmen des Objekts an der ersten Übergabeposition und zum Abgeben des Objekts an zweiten Übergabeposition aufweist, wobei jede der Transporteinrichtungen auf einer umlaufenden Transportführung geführt ist und mit einem Antrieb unabhängig von den anderen, auf der umlaufenden Transportführung geführten Transporteinrichtungen bewegbar ist.

Durch die EP 2 100 733 A1 ist eine Lineardruckmaschine mit austauschbaren Druckmodulen zum Bedrucken von Hohlkörpern bekannt, aufweisend: a) eine Transporteinrichtung mit einem Antrieb, mit der die zu bedruckenden Hohlkörper durch die Lineardruckmaschine transportiert werden, b) zumindest eine erste Druckstation und eine in Förderrichtung der Hohlkörper nach der ersten Druckstation angeordnete zweite Druckstation, c) zumindest eine Trocknungsstation zum Trocknen der Farbe auf den bedruckten Hohlkörpern und d) eine Maschinensteuerung, die zumindest den Transport der Hohlkörper durch die Lineardruckmaschine steuert, e) wobei jede der Druckstationen vorbereitet ist, ein Druckmodul mit eigenen Antrieb aufzunehmen und wobei das Druckmodul über eine Schnittstelle mit der Maschinensteuerung verbindbar ist, f) wobei die Druckmodule die Hohlkörper mit einem Druckverfahren aus Siebdruck und/oder Flexodruck und/oder Offsetdruck und/oder Kaltprägen und/oder Heißprägen und/oder Lasercolortransfer und/oder Inkjet bedrucken.

Der Erfindung liegt die Aufgabe zugrunde, eine Bearbeitungsmaschine mit mehreren Bearbeitungsstationen zum Bearbeiten von Körpern zu schaffen.

Die Aufgabe wird erfindungsgemäß durch die Merkmale des Anspruches 1 gelöst. Die abhängigen Ansprüche betreffen vorteilhafte Ausgestaltungen und/oder Weiterbildungen der gefundenen Lösung.

Die mit der Erfindung erzielbaren Vorteile bestehen insbesondere darin, dass eine Bearbeitungsmaschine mit mehreren Bearbeitungsstationen zum Bearbeiten von Körpern geschaffen wird, die eine hohe Produktivität aufweist. Denn durch die vorgeschlagene Lösung wird eine Ausbringungsmenge an in dieser Bearbeitungsmaschine bearbeiteten Körpern signifikant erhöht, und zwar ohne an Flexibilität in einer Abfolge der in dem jeweiligen Bearbeitungsprozess auszuführenden Bearbeitungsschritte einzubüßen. Weitere Vorteile sind in Verbindung mit der nachfolgenden Beschreibung ersichtlich.

Ein Ausführungsbeispiel der Erfindung ist in den Zeichnungen dargestellt und wird im Folgenden näher beschrieben.

Es zeigen:
- Fig. 1: eine Bearbeitungsmaschine mit nicht erfindungsgemäß nur einer Handhabungseinrichtung;
- Fig. 2: eine Bearbeitungsmaschine mit zwei Handhabungseinrichtungen.

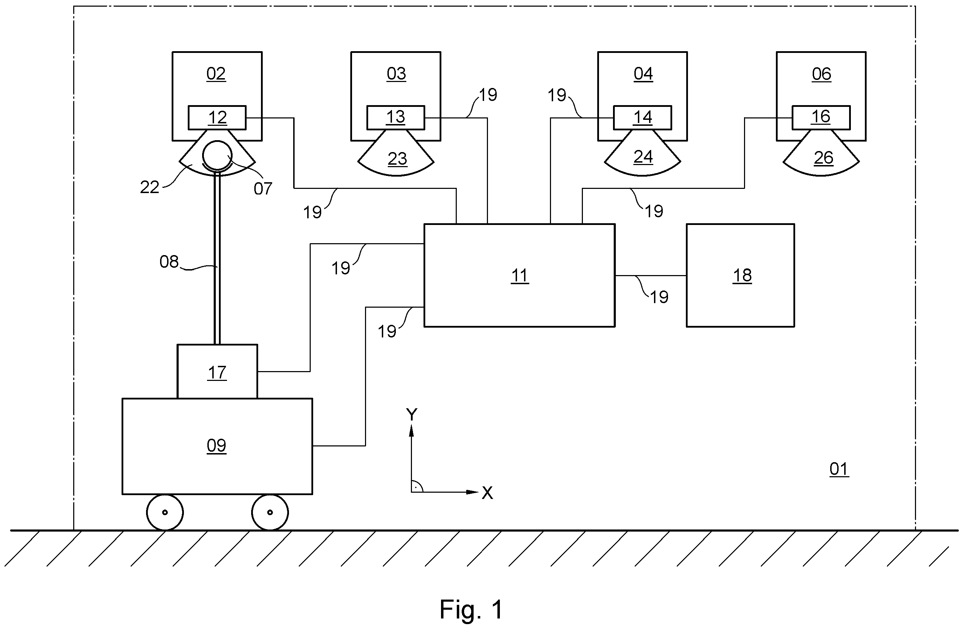

Fig. 1 zeigt beispielhaft stark vereinfacht eine Bearbeitungsmaschine mit mehreren, z. B. vier oder sechs oder acht oder mehr in einem z. B. quaderförmig ausgebildeten Arbeitsraum 01 jeweils insbesondere ortsfest angeordneten Bearbeitungsstationen 02; 03; 04; 06 zum Bearbeiten von Körpern 07. Die zu bearbeitenden Körper 07 werden z. B. mittels einer ersten Fördereinrichtung in diesen z. B. durch eine Einhausung begrenzten Arbeitsraum 01 vorzugsweise automatisiert eingeführt und nach ihrer jeweiligen Bearbeitung z. B. mittels einer zweiten Fördereinrichtung vorzugsweise automatisiert wieder abgeführt oder sind in dieser Weise in den Arbeitsraum 01 der Bearbeitungsmaschine zumindest einführbar und wieder abführbar. Der Arbeitsraum 01 ist innerhalb der Bearbeitungsmaschine somit derjenige Raum, in welchem die einzelnen Bearbeitungsstationen 02; 03; 04; 06 zum Bearbeiten der Körper 07 angeordnet sind und in welchem die Bearbeitung der in diesen Raum eingeführten Körper 07 ausgeführt wird. Die zum Bearbeiten der Körper 07 vorgesehenen Bearbeitungsstationen 02; 03; 04; 06 sind innerhalb des in der Fig. 1 durch eine Umrandung angedeuteten Arbeitsraumes 01 der Bearbeitungsmaschine i. d. R. jeweils an einer z. B. stufenlos wählbaren Position angeordnet, wobei diese Position nach ihrer Wahl zur Ausführung eines bestimmten Bearbeitungsprozesses vorzugsweise fest eingestellt ist. Die jeweiligen Positionen der in dem bestimmten Bearbeitungsprozess zum Bearbeiten der Körper 07 vorgesehenen Bearbeitungsstationen 02; 03; 04; 06 sind jeweils voneinander verschieden und damit voneinander beabstandet. Die Bearbeitungsstationen 02; 03; 04; 06 sind in Transportrichtung der zu bearbeitenden Körper 07 aneinandergereiht, insbesondere linear hintereinander angeordnet, wobei die Transportrichtung der zu bearbeitenden Körper 07 im Wesentlichen von einer im Bereich einer Übergabe der zu bearbeitenden Körper 07 von der ersten Fördereinrichtung in den Arbeitsraum 01 angeordneten Übergabestation zu einer im Bereich einer Übergabe der bearbeiteten Körper 07 vom Arbeitsraum 01 an die zweite Fördereinrichtung angeordneten Übergabestation gerichtet ist. Die Bearbeitungsstationen 02; 03; 04; 06 sind im Arbeitsraum 01 in einer selben horizontalen Ebene angeordnet. Die Bearbeitungsstationen 02; 03; 04; 06 sind in Transportrichtung der zu bearbeitenden Körper 07 z. B. breitenvariabel ausgebildet. Wenngleich die Bearbeitungsstationen 02; 03; 04; 06 im Arbeitsraum 01 der Bearbeitungsmaschine jeweils i. d. R. ortsfest angeordnet sind, so können sie doch an ihren jeweiligen Positionen jeweils gegen eine andersartige Bearbeitungsstation 02; 03; 04; 06 ausgetauscht und/oder in ihrer jeweiligen Position im Rahmen festgelegter Grenzen bei Bedarf verändert und/oder korrigiert werden, wodurch die Bearbeitungsmaschine für verschiedene Bearbeitungsprozesse flexibel einsetzbar und/oder optimierbar ist. Im Arbeitsraum 01 der Bearbeitungsmaschine können in Abhängigkeit vom jeweiligen Bearbeitungsprozess unterschiedlich viele Bearbeitungsstationen 02; 03; 04; 06 zum Einsatz kommen. Während der Ausführung eines bestimmten Bearbeitungsprozesses können zwar alle im Arbeitsraum 01 der Bearbeitungsmaschine jeweils für eine Bearbeitungsstation 02; 03; 04; 06 vorgesehenen Positionen mit einer Bearbeitungsstation 02; 03; 04; 06 bestückt oder belegt sein, jedoch müssen in diesem bestimmten Bearbeitungsprozesses nicht alle diese Bearbeitungsstationen 02; 03; 04; 06 zum Einsatz kommen, sondern je nach den Erfordernissen des bestimmten Bearbeitungsprozesses wird bzw. ist nur eine Auswahl aus den vorhandenen Bearbeitungsstationen 02; 03; 04; 06 zum Einsatz gebracht. Und nur zu diesen in Abhängigkeit vom vorgegebenen Bearbeitungsprozess ausgewählten Bearbeitungsstationen 02; 03; 04; 06 werden zu bearbeitende Körper 07 gebracht.

In einer bevorzugten Ausführung der Erfindung ist die Bearbeitungsmaschine als eine Druckmaschine ausgebildet oder die Bearbeitungsmaschine weist zumindest eine Druckmaschine auf, wobei mehrere Bearbeitungsstationen 02; 03; 04; 06 jeweils als ein Druckwerk ausgebildet sind. Diese Druckwerke sind derart ausgebildet, dass mit ihnen ein ihnen jeweils zugeführter Körper 07 z. B. in einem Siebdruckverfahren oder in einem druckformlosen Druckverfahren, d. h. in einem Digitaldruckverfahren, bedruckt wird oder zumindest bedruckbar ist. Zur Ausführung des Digitaldruckverfahrens wird z. B. ein Inkjet-Druckwerk oder ein Laser verwendet.

Die Bearbeitungsmaschine bearbeitet in einem Bearbeitungsprozess zumeist mehrere, i. d. R. eine größere Menge, z. B. mehrere tausend Stück an identischen Körpern 07, wobei der jeweilige Körper 07 in dem für ihn vorgesehenen Bearbeitungsprozess insbesondere an seiner Mantelfläche bearbeitet wird. Beispielsweise werden die Körper 07 insbesondere an ihrer Mantelfläche jeweils mit einem vorzugsweise mehrfarbigen Druckbild bedruckt. An dem z. B. durch eine Auswahl oder sonstige Festlegung bestimmten für den Körper 07 vorgesehenen Bearbeitungsprozess sind mindestens zwei der mehreren in dem Arbeitsraum 01 angeordneten Bearbeitungsstationen 02; 03; 04; 06 beteiligt, wobei durch den jeweiligen Bearbeitungsprozess festgelegt ist, welche der im Arbeitsraum 01 der Bearbeitungsmaschine vorhandenen Bearbeitungsstationen 02; 03; 04; 06 und in welcher Reihenfolge die betreffenden Bearbeitungsstationen 02; 03; 04; 06 den jeweiligen Körper 07 bearbeiten.

Die Bearbeitungsmaschine ist vorzugsweise derart ausgebildet, dass mit ihr verschiedene jeweils wählbare oder festlegbare Bearbeitungsprozesse ausführbar sind, wobei jeder dieser ausführbaren Bearbeitungsprozesse jeweils durch die zum Einsatz gebrachten oder zum Einsatz zu bringenden Bearbeitungsstationen 02; 03; 04; 06 und durch die Reihenfolge von deren Einsatz bestimmt ist. Mindestens eine der Bearbeitungsstationen 02; 03; 04; 06 kann als eine die jeweiligen Körper 07 vorbehandelnde oder nachbehandelnde Einrichtung ausgebildet sein, z. B. als ein Lackierwerk oder als ein Trockner zum Trocknen einer Druckfarbe, insbesondere als ein UV-Trockner, oder als eine einen zu bearbeitenden Körper 07 erhitzende Beflammeinrichtung. Die Auswahl oder Festlegung der für den bestimmten Bearbeitungsprozess erforderlichen Bearbeitungsstationen 02; 03; 04; 06 wird z. B. durch eine Eingabe an einer oder in Verbindung mit einer Steuereinrichtung 11 getroffen. Diese Steuereinrichtung 11 ist z. B. als eine elektronische, vorzugsweise digitale, insbesondere frei programmierbare Recheneinheit insbesondere mit mindestens einem Mikroprozessor ausgebildet. Die in Abhängigkeit vom auszuführenden Bearbeitungsprozess getroffene Auswahl der Bearbeitungsstationen 02; 03; 04; 06 reduziert die Zahl der zum Einsatz zu bringenden Bearbeitungsstationen 02; 03; 04; 06 z. B. auf eine Teilmenge der mehreren im selben Arbeitsraum 01 angeordneten Bearbeitungsstationen 02; 03; 04; 06. Die Steuereinrichtung 11 steht vorzugsweise in einem Datenaustausch z. B. mit einem Produktionsplanungssystem 21, kurz auch als PPS-System bezeichnet, wobei ein auszuführender Bearbeitungsprozess von dem Produktionsplanungssystem 21 der Steuereinrichtung 11 vorgegeben ist. Ein PPS-System ist ein Computerprogramm oder ein System aus Computerprogrammen, das den Anwender bei der Produktionsplanung und Produktionssteuerung unterstützt und die damit verbundene Datenverwaltung übernimmt. Ziel eines PPS-Systems ist die Realisierung kurzer Durchlaufzeiten, die Termineinhaltung, optimale Bestandshöhen und die wirtschaftliche Nutzung der Betriebsmittel, d. h. in dem hier vorliegenden Fall der Bearbeitungsmaschine mit ihren Bearbeitungsstationen 02; 03; 04; 06. Da PPS-Systeme i. d. R. nicht für die direkte Steuerung der Produktion und von Produktionsanlagen wie z. B. der Bearbeitungsmaschine mit ihren Bearbeitungsstationen 02; 03; 04; 06 vorgesehen sind, ist für die operative Steuerung der Fertigung ein hier z. B. die Steuereinrichtung 11 aufweisender Fertigungsleitstand vorgesehen, um die Fertigungseinheiten und/oder Fertigungsanlagen hier in Form der Bearbeitungsstationen 02; 03; 04; 06 jeweils zu steuern. Der Fertigungsleitstand, d. h. die Steuereinrichtung 11 erhält vom PPS-System i. d. R. über eine Schnittstelle Fertigungsaufträge, die ihrerseits Soll-Daten bilden. Die erzielten Produktionsergebnisse bilden Ist-Daten und werden z. B. mittels einer Betriebsdatenerfassungseinrichtung erfasst und an das PPS-System zurückgemeldet, wobei das PPS-System diese Ist-Daten im nächsten Planungslauf berücksichtigt. Dadurch kann ein entsprechender Regelkreis zur Produktionssteuerung aufgebaut werden.

Um mehrere dem Arbeitsraum 01 der Bearbeitungsmaschine zugeführte zu bearbeitende Körper 07 vorzugsweise jeweils einzeln und nacheinander einer gemäß dem beabsichtigten Bearbeitungsprozess erforderlichen Bearbeitungsstation 02; 03; 04; 06 zuzuführen und von einer Bearbeitungsstation 02; 03; 04; 06 zur nächsten zu transportieren, sind erfindungsgemäß mehrere Handhabungseinrichtungen 08 vorgesehen. Die betreffende für den Transport der zu bearbeitenden oder bearbeiteten Körper 07 vorgesehene Handhabungseinrichtung 08 weist mindestens einen z. B. elektrischen oder pneumatischen Antrieb 09 auf, wobei dieser mindestens eine Antrieb 09 von der Steuereinrichtung 11 gesteuert oder zumindest steuerbar ist. Die betreffende Handhabungseinrichtung 08 ist oder wird mittels ihres mindestens einen Antriebs 09 in Abhängigkeit von von der Steuereinrichtung 11 ausgegebener Steuerdaten von einer ersten den jeweiligen Körper 07 bearbeitenden Bearbeitungsstation 02; 03; 04; 06 zu mindestens einer nächsten diesen selben Körper 07 bearbeitenden Bearbeitungsstation 02; 03; 04; 06 entlang einer Bewegungsbahn vorzugsweise translatorisch bewegt, wobei die Bewegungsbahn der betreffenden Handhabungseinrichtung 08 vorzugsweise geradlinig ausgebildet ist. Die Bewegungsbahn der betreffenden für den Transport der zu bearbeitenden oder bearbeiteten Körper 07 vorgesehenen Handhabungseinrichtung 08 ist durch mindestens ein insbesondere lineares Schienensystem vorgegeben und in einer vertikalen Transportebene angeordnet, wobei die die Bewegungsbahn der betreffenden Handhabungseinrichtung 08 aufweisende vertikale Transportebene jeweils längs zu den Positionen der zum Bearbeiten der Körper 07 vorgesehenen Bearbeitungsstationen 02; 03; 04; 06 angeordnet ist. Die betreffende Handhabungseinrichtung 08 ist vorzugsweise als ein jeweils bidirektional verfahrbares Zweiachssystem ausgebildet, d. h. die betreffende Handhabungseinrichtung 08 weist zwei i. d. R. orthogonal zueinander angeordnete Bewegungsachsen auf, wobei das Zweiachssystem den betreffenden zu bearbeitenden oder bearbeiteten Körper 07 in der vertikalen Transportebene ausgehend z. B. von einer im Bereich der Übergabe der zu bearbeitenden Körper 07 von der ersten Fördereinrichtung in den Arbeitsraum 01 angeordneten Übergabestation der jeweiligen durch den gewählten Bearbeitungsprozess festgelegten Bearbeitungsstation 02; 03; 04; 06 zuführt und anschließend den an der betreffenden Bearbeitungsstation 02; 03; 04; 06 bearbeiteten Körper 07 von dieser Bearbeitungsstation 02; 03; 04; 06 z. B. an die im Bereich der Übergabe der bearbeiteten Körper 07 vom Arbeitsraum 01 an die zweite Fördereinrichtung angeordneten Übergabestation wieder abführt. Die von der betreffenden Handhabungseinrichtung 08 in der vertikalen Transportebene ausgeführten oder zumindest ausführbaren Bewegungen sind in den Figuren jeweils durch die z. B. in einem kartesischen Koordinatensystem angeordneten Bewegungsrichtungen X und Y angedeutet. Ein zu bearbeitender Körper 07 wird vorzugsweise jeweils von unten, d. h. aus einer vertikal tieferen Position an die betreffende, an einer vertikal höheren Position als die betreffende Handhabungseinrichtung 08 angeordneten Bearbeitungsstation 02; 03; 04; 06, z. B. an ein Siebdruckwerk oder an ein Digitaldruckwerk herangeführt oder ist auf diese Weise zumindest heranführbar. Der Transport eines bearbeiteten oder zu bearbeitenden Körpers 07 von einer zur nächsten Bearbeitungsstation 02; 03; 04; 06 erfolgt vorzugsweise unterhalb derjenigen horizontalen Ebene, in welcher die einzelnen Bearbeitungsstationen 02; 03; 04; 06 insbesondere in einer Reihe angeordnet sind.

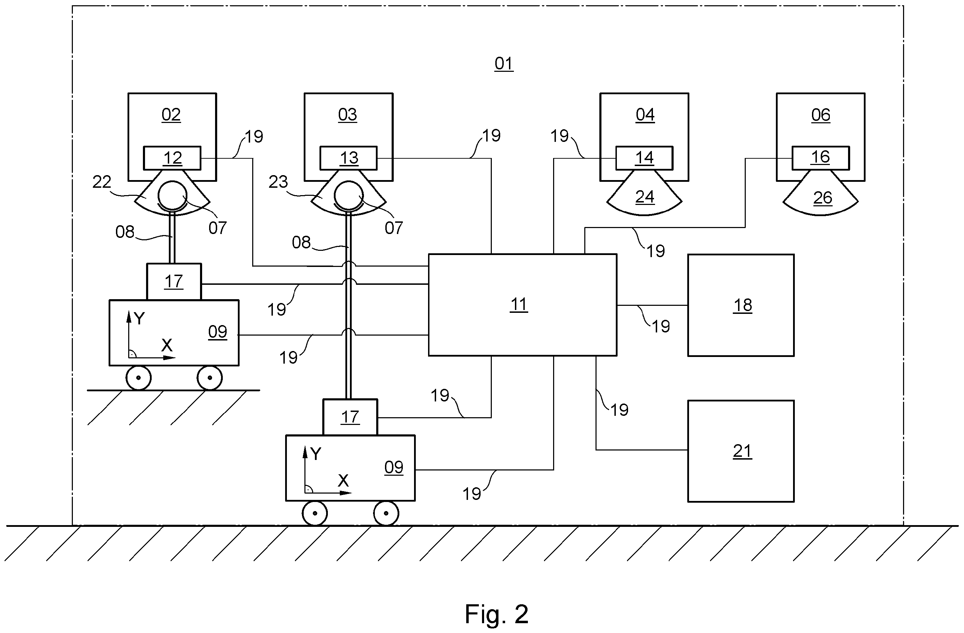

Zur Erhöhung des Massendurchsatzes durch diese Bearbeitungsmaschine, d. h. zur Steigerung ihrer Ausbringungsmenge und/oder zur wirtschaftlicheren Nutzung der Bearbeitungsstationen 02; 03; 04; 06 sind im Arbeitsraum 01 der Bearbeitungsmaschine mehrere, z. B. mindestens zwei oder drei Handhabungseinrichtungen 08 vorgesehen (Fig. 2), die entlang ihrer jeweiligen Bewegungsbahn zeitgleich betrieben oder zumindest zeitgleich betreibbar sind, wobei diese Bewegungsbahnen jeweils in einer Transportebene verlaufen, wobei die Transportebenen dieser Handhabungseinrichtungen 08 zusammen mit den Bearbeitungsstationen 02; 03; 04; 06 im selben Arbeitsraum 01 angeordnet sind. Diese mehreren Handhabungseinrichtungen 08 sind z. B. im Wesentlichen baugleich ausgebildet, d. h. mit gleichen Baugruppen ausgestattet. Um in dem Arbeitsraum 01 der Bearbeitungsmaschine einen untereinander und mit den Bearbeitungsstationen 02; 03; 04; 06 kollisionsfreien zeitgleichen Betrieb dieser mehreren Handhabungseinrichtungen 08 zu gewährleisten, ist vorgesehen, dass die jeweiligen Antriebe 09 dieser zeitgleich betriebenen Handhabungseinrichtungen 08 jeweils mittels von der Steuereinrichtung 11 bereit gestellter, insbesondere an diese Antriebe 09 ausgegebener Steuerdaten gesteuert sind, wobei diese Steuerdaten die jeweilige Handhabungseinrichtung 08 sich jeweils entlang mindestens einer Bewegungsbahn vorzugsweise translatorisch bewegen lassen, d. h. durch diese
Steuerdaten ist eine Bewegung der jeweiligen Handhabungseinrichtung 08 entlang einer bestimmten Bewegungsbahn vorgegeben, wobei von diesen mehreren im selben Arbeitsraum 01 angeordneten Handhabungseinrichtungen 08 entlang dieser Bewegungsbahnen ausgeführte Bewegungen aufgrund ihrer Programmierung kollisionsfrei ausgebildet sind. Kollisionsfreiheit bedeutet, dass eine im Arbeitsraum 01 bewegte Handhabungseinrichtung 08 zu keinem Zeitpunkt an derselben Position wie eine andere in demselben Arbeitsraum 01 bewegte Handhabungseinrichtung 08 oder eine der in demselben Arbeitsraum 01 angeordneten Bearbeitungsstationen 02; 03; 04; 06 angeordnet ist. Der Kollisionsschutz der mehreren im selben Arbeitsraum 01 angeordneten und zeitgleich betriebenen Handhabungseinrichtungen 08 ist somit nicht hardwaretechnisch, z. B. unter Verwendung von mit der Steuereinrichtung 11 verbundenen und kommunizierenden Sensoren, sondern durch eine entsprechende Antriebssteuerung, d. h. durch entsprechende von der Steuereinrichtung 11 ausgegebene Steuerdaten realisiert. Die Steuerdaten für die Antriebe 09 der jeweiligen Handhabungseinrichtungen 08 sind derart gewählt, dass für die an der Ausführung eines bestimmten Bearbeitungsprozesses beteiligten Handhabungseinrichtungen 08 in dem Arbeitsraum 01 eine denselben Zeitpunkt betreffende Positionsgleichheit ausgeschlossen ist. Durch eine entsprechende in der Steuereinrichtung 11 gespeicherte Programmierung der Bewegungsabläufe, d. h. durch entsprechende Steuerdaten wird eine vorausschauende Kollisionserkennung und/oder Kollisionsvermeidung ermöglicht und auch realisiert. Des Weiteren hat ein durch die Antriebssteuerung realisierter Kollisionsschutz der mehreren im selben Arbeitsraum 01 angeordneten und zeitgleich betriebenen Handhabungseinrichtungen 08 den Vorteil, dass die jeweiligen entlang ihrer Bewegungsbahn auszuführenden Bewegungen dieser mehreren im selben Arbeitsraum 01 angeordneten Handhabungseinrichtungen 08 im Hinblick auf den Massendurchsatz und/oder auf eine vibrationsarme und/oder auf eine in ihrem jeweiligen Lauf ruhige Ausführung programmtechnisch jeweils insbesondere unter Berücksichtigung des vorgesehenen, z. B. von dem Produktionsplanungssystem 21 vorgegebenen Bearbeitungsprozesses bzw. in Abhängigkeit von diesem Bearbeitungsprozess optimiert werden können und/oder auch optimiert sind. Eine derartige in der Steuereinrichtung 11 vorzugsweise automatisiert z. B. mittels mathematischer Verfahren zielgerichtet durchgeführte Optimierung berücksichtigt z. B. eine Phasenverschiebung zwischen zyklisch ausführenden Bewegungsabläufen verschiedener Handhabungseinrichtungen 08 und/oder Wartezeiten und/oder Beschleunigungszeiten oder Abbremszeiten innerhalb der Bewegungsabläufe der am Bearbeitungsprozess beteiligten Handhabungseinrichtungen 08. Die jeweiligen entlang ihrer Bewegungsbahn auszuführenden Bewegungen dieser mehreren im selben Arbeitsraum 01 angeordneten Handhabungseinrichtungen 08 sind dann von der Steuereinrichtung 11 jeweils unter Berücksichtigung einer Phasenverschiebung zwischen zyklisch ausgeführten Bewegungsabläufen verschiedener Handhabungseinrichtungen 08 und/oder von Wartezeiten und/oder von Beschleunigungszeiten oder von Abbremszeiten innerhalb dieser Bewegungsabläufe der am Bearbeitungsprozess beteiligten Handhabungseinrichtungen 08 gesteuert.

Fig. 2 zeigt beispielhaft eine Bearbeitungsmaschine mit mehreren, hier z. B. zwei im selben Arbeitsraum 01 angeordneten und zeitgleich betriebenen oder zumindest betreibbaren Handhabungseinrichtungen 08, wobei diese beiden Handhabungseinrichtungen 08 z. B. in zwei verschiedenen vertikal übereinander und damit beabstandet voneinander angeordneten horizontalen Ebenen angeordnet und in ihrer jeweiligen Ebene entlang eines Schienensystems jeweils horizontal insbesondere bidirektional bewegt oder zumindest bewegbar sind. Diese vorzugsweise wieder jeweils als ein Zweiachssystem ausgebildeten Handhabungseinrichtungen 08 weisen jeweils z. B. eine Hubeinrichtung auf, mit welcher der von der jeweiligen Handhabungseinrichtung 08 transportierte Körper 07 durch eine vertikale Bewegung der jeweiligen Bearbeitungsstation 02; 03; 04; 06 zugeführt wird oder zumindest zuführbar ist. Natürlich wird die jeweilige Handhabungseinrichtung 08 auch dazu verwendet, einen an einer Bearbeitungsstation 02; 03; 04; 06 bearbeiteten Körper 07 von dort wieder abzuführen, z. B. durch ein Absenken der Hubeinrichtung, und dann in X-Richtung durch eine horizontale Bewegung insbesondere entlang einer horizontalen Linearführung z. B. zu einer nächsten Bearbeitungsstation 02; 03; 04; 06 zu transportieren. Die Hubeinrichtung der jeweiligen Handhabungseinrichtung 08 ist somit in Y-Richtung insbesondere entlang einer vertikalen Linearführung wirksam. Die Bewegungen der jeweiligen Handhabungseinrichtung 08 in X-Richtung und in Y-Richtung werden nacheinander ausgeführt oder sind zumindest nacheinander ausführbar oder vorzugsweise gleichzeitig ausgeführt oder zumindest gleichzeitig ausführbar. Die in der Steuereinrichtung 11 gespeicherte Programmierung für die Bewegungsabläufe dieser beiden Handhabungseinrichtungen 08 sieht z. B. vor, dass bei einer Kollisionsgefahr bzw. zur Kollisionsvermeidung die in der unteren der beiden vertikal übereinander angeordneten Ebenen angeordnete Handhabungseinrichtung 08, d. h. insbesondere deren Hubeinrichtung in eine sichere untere Position fährt bzw. aufgrund der ihren mindestens einen Antrieb 09 steuernden Steuerdaten gefahren ist und damit den Weg für eine horizontale die Bewegungsbahn der in der unteren der beiden vertikal übereinander angeordneten Ebenen angeordneten Handhabungseinrichtung 08 kreuzende Bewegung der in der oberen der beiden vertikal übereinander angeordneten Ebenen angeordneten Handhabungseinrichtung 08 freigibt. Die jeweilige Handhabungseinrichtung 08, insbesondere deren Hubeinrichtung ist z. B. jeweils mit einer Aufnahmeeinrichtung für den jeweiligen zu bearbeitenden Körper 07 ausgestattet, wobei diese Aufnahmeeinrichtung z. B. formatvariabel ausgebildet ist, um an geometrisch unterschiedlich geformte Körper 07 anpassbar zu sein.

In einer weiteren Ausführung einer mehrere Handhabungseinrichtungen 08 aufweisenden Bearbeitungsmaschine kann vorgesehen sein, das der jeweilige Wirkungsbereich einer jeden dieser Handhabungseinrichtungen 08 keine räumliche Überschneidung oder Überlappung mit dem jeweiligen Wirkungsbereich von einer der anderen Handhabungseinrichtungen 08 aufweist. Die jeweiligen Wirkungsbereiche der an dem vorgesehenen Bearbeitungsprozess beteiligten Handhabungseinrichtungen 08 sind somit räumlich voneinander getrennt ausgebildet. Dabei ist zwischen benachbarten Handhabungseinrichtungen 08 z. B. mindestens eine Übergabestation vorgesehen, wobei ein bearbeiteter oder zu bearbeitender Körper 07 an der betreffenden Übergabestation von einer Handhabungseinrichtung 08 zur nächsten übergeben wird oder zumindest übergebbar ist.

Zur weiteren Erhöhung des Massendurchsatzes durch eine gattungsgemäße Bearbeitungsmaschine, d. h. zur weiteren Steigerung ihrer Ausbringungsmenge und/oder zur noch wirtschaftlicheren Nutzung der Bearbeitungsstationen 02; 03; 04; 06 sind in einer vorteilhaften Ausführung der Erfindung in der Bearbeitungsmaschine mehrere vertikale Transportebenen jeweils parallel zueinander und jeweils horizontal voneinander beabstandet angeordnet, wobei in jeder dieser vertikalen Transportebenen jeweils mindestens eine Handhabungseinrichtung 08 angeordnet ist. Die in unterschiedlichen vertikalen Transportebenen agierenden Handhabungseinrichtungen 08 sind vorzugsweise unabhängig voneinander betrieben oder zumindest betreibbar.

Die betreffende Handhabungseinrichtung 08 ist z. B. als ein insbesondere entlang mindestens einer Linearführung durch den betreffenden Antrieb 09 verfahrbarer Roboter, insbesondere Industrieroboter ausgebildet. Die betreffende Handhabungseinrichtung 08 bewirkt in der Bearbeitungsmaschine durch den Transport der zu bearbeitenden Körper 07 einen Materialfluss entlang der in einem bestimmten Bearbeitungsprozess erforderlichen Bearbeitungsstationen 02; 03; 04; 06. Außer dem Transport übt die betreffende Handhabungseinrichtung 08 die Funktion aus, den zu bearbeitenden Körper 07 in einer definierten Pose und/oder Orientierung an der jeweiligen Bearbeitungsstation 02; 03; 04; 06 bereit zu stellen und/oder dort während der Durchführung des bestimmten Bearbeitungsprozesses zu halten. Die betreffende Handhabungseinrichtung 08 übt ihre jeweiligen Funktionen jeweils programmgesteuert aus. Daher ist die jeweilige Handhabungseinrichtung 08 mit der Steuereinrichtung 11 zumindest datentechnisch verbunden, wobei die Steuereinrichtung 11 die jeweilige Funktionen der betreffenden Handhabungseinrichtung 08 steuert.

Zum Bearbeiten eines von der betreffenden Handhabungseinrichtung 08 transportierten Körpers 07 vorgesehene Bearbeitungsstationen 02; 03; 04; 06 weisen jeweils mindestens einen Näherungsschalter 12; 13; 14; 16 jeweils mit einem in die Bewegungsbahn der betreffenden Handhabungseinrichtung 08 ragenden Erfassungsbereich 22; 23; 24; 26 auf. Ein Näherungsschalter 12; 13; 14; 16, der auch als Näherungsinitiator bezeichnet wird, ist ein Sensor, der auf eine Annäherung eines Objektes (hier vorzugsweise eines Körpers 07 und/oder der betreffenden Handhabungseinrichtung 08 und/oder des betreffenden Antriebs 09 der jeweiligen Handhabungseinrichtung 08) an diesen Näherungsschalter 12; 13; 14; 16 reagiert, wobei die Reaktion dieses Sensors ohne direkten Kontakt zwischen Objekt und Näherungsschalter 12; 13; 14; 16, also berührungsfrei erfolgt. Näherungsschalter 12; 13; 14; 16 werden beispielsweise zur Positionserkennung von Objekten eingesetzt. Der Erfassung bzw. Erkennung der Annäherung eines Objektes an den Näherungsschalter 12; 13; 14; 16 liegt z. B. ein induktives oder kapazitives oder magnetisches oder optisches oder Ultraschall basiertes Wirkprinzip zugrunde. Insbesondere wenn die betreffende Bearbeitungsstation 02; 03; 04; 06 in Transportrichtung der zu bearbeitenden Körper 07 z. B. breitenvariabel ausgebildet ist, d. h. in ihrer jeweiligen sich in Transportrichtung der zu bearbeitenden Körper 07 erstreckenden Breite vorzugsweise stufenlos veränderbar ist, sind i. V. m. der betreffenden Bearbeitungsstation 02; 03; 04; 06 mehrere Näherungsschalter 12; 13; 14; 16 vorgesehen, um mit Bezug auf die Breite dieser Bearbeitungsstation 02; 03; 04; 06 z. B. deren Anfang oder Ende zu kennzeichnen.

Die betreffende für den Transport des zu bearbeitenden Körpers 07 vorgesehene Handhabungseinrichtung 08 weist einen mit Bezug auf ihre Bewegungsbahn die jeweilige Position dieser Handhabungseinrichtung 08 angebenden Absolutwertgeber 17 auf. Ein Absolutwertgeber 17 ist ein Längen- oder Winkelmessgerät, das als ein Wegmessgerät eingesetzt wird. Der von einem Absolutwertgeber 17 bereit gestellte absolute Messwert steht ohne Referenzieren unmittelbar nach dem Einschalten des Absolutwertgebers 17 zur Verfügung. Ein Absolutwertgeber 17 gibt eine Lageinformation bzw. einen Positionswert in Form eines digitalen Zahlenwertes aus. Da dieser Zahlenwert über den gesamten Auflösebereich des Absolutwertgebers 17 eindeutig ist, wird keine anfängliche Referenzfahrt benötigt. Dem Ermitteln der aktuellen Lageinformation liegt z. B. ein induktives oder kapazitives oder magnetisches oder optisches Wirkprinzip zugrunde.

Der mindestens eine Näherungsschalter 12; 13; 14; 16 der jeweiligen Bearbeitungsstation 02; 03; 04; 06 und der Absolutwertgeber 17 der jeweiligen Handhabungseinrichtung 08 sind ebenso wie der jeweilige Antrieb 09 der jeweiligen Handhabungseinrichtung 08 jeweils zumindest datentechnisch über ein Leitungssystem 19, z. B. über ein als Datenbussystem ausgebildetes Leitungssystem 19 leitungsgebunden oder drahtlos jeweils mit der Steuereinrichtung 11 verbunden, wobei die Steuereinrichtung 11 i. d. R. eine vorzugsweise digitale Speichereinrichtung 18 aufweist.

Die Bearbeitungsmaschine weist mindestens zwei Betriebszustände auf, nämlich zumindest eine Einlernphase und eine Produktionsphase. In einem ersten Betriebszustand der Bearbeitungsmaschine, d. h. in ihrer Einlernphase ist vorgesehen, dass die Speichereinrichtung 18 den insbesondere vom jeweiligen Absolutwertgeber 17 mit Bezug auf die Bewegungsbahn der betreffenden für den Transport des zu bearbeitenden Körpers 07 vorgesehenen Handhabungseinrichtung 08 angegebenen Positionswert jeweils in Abhängigkeit von einem bestimmten für den oder die jeweiligen Körper 07 vorgesehenen Bearbeitungsprozess speichert, wenn sich diese Handhabungseinrichtung 08 im Erfassungsbereich 22; 23; 24; 26 des betreffenden Näherungsschalters 12; 13; 14; 16 der diesen Näherungsschalter 12; 13; 14; 16 aufweisenden Bearbeitungsstation 02; 03; 04; 06 befindet, d. h. dort angeordnet ist. Während des ersten Betriebszustandes der Bearbeitungsmaschine wird eine Kalibrierfahrt für die betreffende für den Transport des zu bearbeitenden Körpers 07 vorgesehene Handhabungseinrichtung 08 durchgeführt. Die Bearbeitungsmaschine wird mit Hilfe der Kalibrierfahrt auf einen bestimmten Bearbeitungsprozess vorbereitet und anhand der während der Kalibrierfahrt insbesondere mittels des jeweiligen Absolutwertgeber 17 ermittelten Positionswerte für den betreffenden Bearbeitungsprozess eingerichtet. Am Ende der Einlernphase wechselt die Bearbeitungsmaschine vorzugsweise automatisch in ihren zweiten Betriebszustand, d. h. in ihre Produktionsphase und ist sodann in der Lage, Funktionen ihres zweiten Betriebszustandes auszuführen.

In dem zweiten Betriebszustand der Bearbeitungsmaschine ist der betreffende Antrieb 09 der jeweiligen Handhabungseinrichtung 08 von der Steuereinrichtung 11 derart gesteuert, dass die betreffende Handhabungseinrichtung 08 in Abhängigkeit von dem bestimmten für den oder die jeweiligen Körper 07 vorgesehenen Bearbeitungsprozess die im ersten Betriebszustand der Bearbeitungsmaschine in der Speichereinrichtung 18 mit Bezug auf die Bewegungsbahn dieser Handhabungseinrichtung 08 gespeicherten Positionen nacheinander einnimmt. Dieser zweite Betriebszustand der Bearbeitungsmaschine entspricht einer Produktionsphase für diese Bearbeitungsmaschine, bei der die zuvor gespeicherten und damit eingelernten Positionen von der betreffenden Handhabungseinrichtung 08 jeweils in Abhängigkeit von dem bestimmten für den oder die jeweiligen Körper 07 vorgesehenen Bearbeitungsprozess nacheinander angefahren und der oder die jeweilige Körper 07 in der betreffenden Bearbeitungsstation 02; 03; 04; 06 bearbeitet werden.

Um die Positioniergenauigkeit für die betreffende Handhabungseinrichtung 08 zu erhöhen, ist vorgesehen, dass die betreffende Handhabungseinrichtung 08 im ersten Betriebszustand der Bearbeitungsmaschine, d. h. in der Einlernphase jede Bearbeitungsstation 02; 03; 04; 06, die für einen bestimmten für den jeweiligen Körper 07 vorgesehenen Bearbeitungsprozess erforderlich ist, mehrfach anfährt und dass dann, wenn sich diese Handhabungseinrichtung 08 im Erfassungsbereich 22; 23; 24; 26 des betreffenden Näherungsschalters 12; 13; 14; 16 der diesen Näherungsschalter 12; 13; 14; 16 aufweisenden Bearbeitungsstation 02; 03; 04; 06 befindet, der jeweilige mit Bezug auf die Bewegungsbahn der betreffenden für den Transport des zu bearbeitenden Körpers 07 vorgesehenen Handhabungseinrichtung 08 angegebene Positionswert in der Speichereinrichtung 18 gespeichert wird. Das mehrfache, z. B. zweifache Anfahren derselben Bearbeitungsstation 02; 03; 04; 06 erfolgt z. B. während einer Hin- und Rückfahrt der betreffenden Handhabungseinrichtung 08 entlang ihrer vorgegebenen Bewegungsbahn. Zur Ermittlung des im zweiten Betriebszustand der Bearbeitungsmaschine zu verwendenden Positionswertes, d. h. für die Verwendung in der Produktionsphase dieser Bearbeitungsmaschine ist vorgesehen, dass die Steuereinrichtung 11 aus den für eine bestimmte Bearbeitungsstation 02; 03; 04; 06 erfassten Positionswerten einen z. B. arithmetischen Mittelwert errechnet und dann diesen Mittelwert verwendet, um den mindestens einen Antrieb 09 der jeweiligen Handhabungseinrichtung 08 anzusteuern und dadurch die jeweilige Handhabungseinrichtung 08 im zweiten Betriebszustand der Bearbeitungsmaschine auf die zu dieser bestimmten Bearbeitungsstation 02; 03; 04; 06 gehörende Position einzustellen.

Da vorgesehen ist, dass die Speichereinrichtung 18 die vom jeweiligen Absolutwertgeber 17 mit Bezug auf die Bewegungsbahn der betreffenden für den Transport des zu bearbeitenden Körpers 07 vorgesehenen Handhabungseinrichtung 08 angegebenen Positionswert jeweils in Abhängigkeit von einem bestimmten für die jeweiligen Körper 07 vorgesehenen Bearbeitungsprozess speichert, kann die Steuereinrichtung 11 z. B. durch einen Vergleich der aktuellen Produktion mit früheren gleichen Produktionen prüfen, ob die zur Ausführung des beabsichtigten Bearbeitungsprozesses erforderlichen Bearbeitungsstationen 02; 03; 04; 06 vorhanden und korrekt, d. h. z. B. an der richtigen Position montiert sind.

In einer vorteilhaften Weiterbildung der gefundenen Lösung weisen die Bearbeitungsstationen 02; 03; 04; 06 jeweils ein automatisiert lesbares Kennzeichen auf, z. B. ein RFID. Wenn sich eine Handhabungseinrichtung 08 im Erfassungsbereich 22; 23; 24; 26 des betreffenden Näherungsschalters 12; 13; 14; 16 der diesen Näherungsschalter 12; 13; 14; 16 aufweisenden Bearbeitungsstation 02; 03; 04; 06 befindet, kann vorgesehen sein, dass die betreffende das Kennzeichen aufweisende Bearbeitungsstation 02; 03; 04; 06 sich z. B. gegenüber der Handhabungseinrichtung 08 identifiziert und entweder direkt oder via der betreffenden Handhabungseinrichtung 08 eine technische Information bezüglich ihrer Funktion und/oder ihrer Leistungsdaten an die Steuereinrichtung 11 überträgt, so dass diese technische Information in der Speichereinrichtung 18 jeweils zusammen mit dem erfassten Positionswert gespeichert wird. Eine derartige zusätzlich bereit gestellte technische Information lautet beispielsweise: "Siebdruckwerk - 240 mm breit" oder "Digitaldruckwerk - 80 mm breit - Druckfarbe Cyan". Anhand dieser zusätzlich bereit gestellten technischen Information kann der beabsichtigte Bearbeitungsprozess noch besser überprüft werden.

Wenn in der Bearbeitungsmaschine mehreren insbesondere zeitgleich agierende Handhabungseinrichtungen 08 angeordnet sind, ist vorzugsweise vorgesehen, dass diese Handhabungseinrichtungen 08 z. B. unabhängig voneinander vor ihrer jeweiligen Produktionsphase jeweils eine Kalibrierfahrt ausführen.

Des Weiteren ist z. B. vorgesehen, dass die Steuereinrichtung 11 die in der Speichereinrichtung 18 gegebenenfalls zusammen mit weiteren technischen Informationen gespeicherten Positionswerte verschiedener Bearbeitungsstationen 02; 03; 04; 06 dahingehend auswertet, dass sie mit Bezug auf einen bestimmten für den jeweiligen Körper 07 vorgesehenen Bearbeitungsprozess z. B. an einer mit der Steuereinrichtung 11 verbundenen Anzeigeeinrichtung eine Empfehlung für eine optimierte Positionierung der Bearbeitungsstationen 02; 03; 04; 06 im Arbeitsraum 01 und/oder hinsichtlich der Reihenfolge ihres jeweiligen Einsatzes ausgibt.

Es kann vorgesehen sein, dass mindestens eine der Bearbeitungsstationen 02; 03; 04; 06 jeweils eine Positioniereinrichtung aufweist, wobei die Position der betreffenden Bearbeitungsstation 02; 03; 04; 06 mittels der jeweiligen Positioniereinrichtung insbesondere zwecks einer Leistungsoptimierung für einen bestimmten Bearbeitungsprozess automatisiert, d. h. insbesondere durch die Steuereinrichtung 11 gesteuert eingestellt wird oder zumindest einstellbar ist.

### Bezugszeichenliste

- 01: Arbeitsraum
- 02: Bearbeitungsstation
- 03: Bearbeitungsstation
- 04: Bearbeitungsstation
- 05: -
- 06: Bearbeitungsstation
- 07: Körper
- 08: Handhabungseinrichtung
- 09: Antrieb
- 10: -
- 11: Steuereinrichtung
- 12: Näherungsschalter
- 13: Näherungsschalter
- 14: Näherungsschalter
- 15: -
- 16: Näherungsschalter
- 17: Absolutwertgeber
- 18: Speichereinrichtung
- 19: Leitungssystem
- 20: -
- 21: Produktionsplanungssystem
- 22: Erfassungsbereich
- 23: Erfassungsbereich
- 24: Erfassungsbereich
- 25: -
- 26: Erfassungsbereich
- X: Bewegungsrichtung
- Y: Bewegungsrichtung

## Patentansprüche

1. Bearbeitungsmaschine mit mehreren Bearbeitungsstationen (02; 03; 04; 06) zum Bearbeiten von Körpern (07), wobei die zum Bearbeiten der Körper (07) vorgesehenen Bearbeitungsstationen (02; 03; 04; 06) in einem Arbeitsraum (01) jeweils an voneinander verschiedenen Positionen in Transportrichtung der zu bearbeitenden Körper (07) aneinandergereiht angeordnet sind, wobei die jeweilige Position der betreffenden Bearbeitungsstation (02; 03; 04; 06) zur Ausführung eines bestimmten Bearbeitungsprozesses eingestellt ist, wobei die jeweiligen jeweils zur Ausführung ihres Bearbeitungsprozesses eingestellten Positionen der Bearbeitungsstationen (02; 03; 04; 06) im Arbeitsraum (01) in einer selben horizontalen Ebene angeordnet sind, wobei ein Transport eines zu bearbeitenden oder bearbeiteten Körpers (07) von einer zur nächsten Bearbeitungsstation (02; 03; 04; 06) unterhalb derjenigen horizontalen Ebene erfolgt, in welcher die jeweiligen jeweils zur Ausführung ihres Bearbeitungsprozesses eingestellten Positionen der einzelnen Bearbeitungsstationen (02; 03; 04; 06) angeordnet sind, wobei in dem Arbeitsraum (01) mehrere zeitgleich betriebene oder zumindest zeitgleich betreibbare Handhabungseinrichtungen (08) vorgesehen sind, wobei eine jede Handhabungseinrichtung (08) jeweils zum Transport von mindestens einem zu bearbeitenden oder bearbeiteten Körper (07) vorgesehen ist, wobei mindestens zwei der im selben Arbeitsraum (01) angeordneten und zeitgleich betriebenen oder zumindest betreibbaren Handhabungseinrichtungen (08) in verschiedenen vertikal übereinander angeordneten horizontalen Ebenen angeordnet und in ihrer jeweiligen Ebene jeweils horizontal bewegt oder zumindest bewegbar sind, wobei eine Bewegungsbahn der betreffenden für den Transport der zu bearbeitenden oder bearbeiteten Körper (07) vorgesehenen Handhabungseinrichtung (08) in einer vertikalen Transportebene angeordnet ist, wobei die die Bewegungsbahn der betreffenden Handhabungseinrichtung (08) aufweisende vertikale Transportebene jeweils längs zu den Positionen der zum Bearbeiten der Körper (07) vorgesehenen Bearbeitungsstationen (02; 03; 04; 06) angeordnet ist, **dadurch gekennzeichnet, dass** die Handhabungseinrichtungen (08) in ihrer jeweiligen Ebene jeweils entlang eines Schienensystems horizontal bewegt oder zumindest bewegbar sind.

2. Bearbeitungsmaschine nach Anspruch 1, **dadurch gekennzeichnet, dass** ein zu bearbeitender Körper (07) jeweils aus einer vertikal tieferen Position an die betreffende, an einer vertikal höheren Position als die betreffende Handhabungseinrichtung (08) angeordneten Bearbeitungsstation (02; 03; 04; 06) herangeführt oder zumindest heranführbar ist.

3. Bearbeitungsmaschine nach Anspruch 1 oder 2, **dadurch gekennzeichnet, dass** mehrere Bearbeitungsstationen (02; 03; 04; 06) jeweils als ein Druckwerk ausgebildet sind, wobei diese Druckwerke derart ausgebildet sind, dass mit ihnen ein ihnen jeweils zugeführter Körper (07) in einem Siebdruckverfahren oder in einem druckformlosen Druckverfahren bedruckt wird oder zumindest bedruckbar ist und/oder dass mindestens eine der Bearbeitungsstationen (02; 03; 04; 06) als eine die jeweiligen Körper (07) vorbehandelnde oder nachbehandelnde Einrichtung in Form eines Lackierwerkes oder eines Trockners, insbesondere eines UV-Trockner, oder einer Beflammeinrichtung ausgebildet ist.

4. Bearbeitungsmaschine nach Anspruch 1 oder 2 oder 3, **dadurch gekennzeichnet, dass** die im selben Arbeitsraum (01) angeordneten und zeitgleich betriebenen Handhabungseinrichtungen (08) jeweils bidirektional bewegbar sind.

5. Bearbeitungsmaschine nach Anspruch 1 oder 2 oder 3 oder 4, **dadurch gekennzeichnet, dass** die jeweilige Handhabungseinrichtung (08) mit einer Aufnahmeeinrichtung für den jeweiligen zu bearbeitenden Körper (07) ausgestattet ist, wobei diese Aufnahmeeinrichtung zur Aufnahme geometrisch unterschiedlich geformter Körper (07) formatvariabel ausgebildet ist.

6. Bearbeitungsmaschine nach Anspruch 1 oder 2 oder 3 oder 4 oder 5, **dadurch gekennzeichnet, dass** eine Steuereinrichtung (11) vorgesehen ist.

7. Bearbeitungsmaschine nach Anspruch 6, **dadurch gekennzeichnet, dass** die im Arbeitsraum (01) angeordneten Bearbeitungsstationen (02; 03; 04; 06) jeweils an einer stufenlos wählbaren Position angeordnet sind, wobei mindestens eine der im Arbeitsraum (01) angeordneten Bearbeitungsstationen (02; 03; 04; 06) jeweils mittels einer Positioniereinrichtung durch die Steuereinrichtung (11) gesteuert eingestellt oder zumindest einstellbar ist.

8. Bearbeitungsmaschine nach Anspruch 2 oder 3 oder 4 oder 5 oder 6 oder 7, **dadurch gekennzeichnet, dass** zur Kollisionsvermeidung die in einer unteren der vertikal übereinander angeordneten Ebenen angeordnete Handhabungseinrichtung (08) n eine sichere untere Position gefahren ist und damit den Weg für eine horizontale die Bewegungsbahn der in der unteren der vertikal übereinander angeordneten Ebenen angeordneten Handhabungseinrichtung (08) kreuzende Bewegung der in der oberen der vertikal übereinander angeordneten Ebenen angeordneten Handhabungseinrichtung (08) freigibt.

9. Bearbeitungsmaschine nach Anspruch 6 oder 7 oder 8, **dadurch gekennzeichnet, dass** in Abhängigkeit vom auszuführenden Bearbeitungsprozess von der Steuereinrichtung (11) eine Auswahl von mindestens zwei Bearbeitungsstationen (02; 03; 04; 06) aus der Menge der vorhandenen Bearbeitungsstationen (02; 03; 04; 06) zum Einsatz gebracht ist, wobei die Handhabungseinrichtungen (08) von der Steuereinrichtung (11) nur zu den ausgewählten Bearbeitungsstationen (02; 03; 04; 06) bewegt sind.

10. Bearbeitungsmaschine nach Anspruch 8 oder 9, **dadurch gekennzeichnet, dass** die jeweiligen entlang ihrer jeweiligen Bewegungsbahn auszuführenden von der Steuereinrichtung (11) gesteuerten Bewegungen dieser mehreren im selben Arbeitsraum (01) angeordneten Handhabungseinrichtungen (08) jeweils unter Berücksichtigung einer Phasenverschiebung zwischen zyklisch ausgeführten Bewegungsabläufen verschiedener Handhabungseinrichtungen (08) und/oder von Wartezeiten und/oder von Beschleunigungszeiten oder von Abbremszeiten innerhalb dieser Bewegungsabläufe der Handhabungseinrichtungen (08) gesteuert sind.

11. Bearbeitungsmaschine nach Anspruch 6 oder 7 oder 8 oder 9 oder 10, **dadurch gekennzeichnet, dass** die Steuereinrichtung (11) mit einem Produktionsplanungssystem (21) in einem Datenaustausch steht, wobei ein auszuführender Bearbeitungsprozess von dem Produktionsplanungssystem (21) der Steuereinrichtung (11) vorgegeben ist.

12. Bearbeitungsmaschine nach Anspruch 1 oder 2 oder 3 oder 4 oder 5 oder 6 oder 7 oder 8 oder 9 oder 10 oder 11, **dadurch gekennzeichnet, dass** die Handhabungseinrichtungen (08) jeweils als ein in einer vertikalen Transportebene jeweils verfahrbares Zweiachssystem ausgebildet sind.

13. Bearbeitungsmaschine nach Anspruch 1 oder 2 oder 3 oder 4 oder 5 oder 6 oder 7 oder 8 oder 9 oder 10 oder 11 oder 12, **dadurch gekennzeichnet, dass** jede Handhabungseinrichtung (08) jeweils nur einen einzelnen Körper (07) transportierend ausgebildet ist.

14. Bearbeitungsmaschine nach Anspruch 1 oder 2 oder 3 oder 4 oder 5 oder 6 oder 7 oder 8 oder 9 oder 10 oder 11 oder 12 oder 13, **dadurch gekennzeichnet, dass** die jeweiligen Wirkungsbereiche der an dem vorgesehenen Bearbeitungsprozess beteiligten Handhabungseinrichtungen (08) räumlich voneinander getrennt ausgebildet sind.

15. Bearbeitungsmaschine nach Anspruch 1 oder 2 oder 3 oder 4 oder 5 oder 6 oder 7 oder 8 oder 9 oder 10 oder 11 oder 12 oder 13 oder 14, **dadurch gekennzeichnet, dass** sie als eine Druckmaschine ausgebildet ist oder dass sie zumindest eine Druckmaschine aufweist.

## Claims

1. A processing machine with a plurality of processing stations (02; 03; 04; 06) for processing bodies (07), wherein the processing stations (02; 03; 04; 06) provided for processing the bodies (07) are arranged in a working space (01) in each case at positions different from one another in the transport direction of the bodies (07) to be processed, wherein the respective position of the relevant processing station (02; 03; 04; 06) is adjusted for the execution of a specified processing procedure, wherein the respective positions of the processing stations (02; 03; 04; 06) adjusted in each case for the execution of their specified processing procedures are arranged in the working space (01) on a same horizontal plane, wherein a transport of a body (07) that has been or will be processed occurs from one processing station (02; 03; 04; 06) to the next below its horizontal plane, in which the respective positions of the individual processing stations (02; 03; 04; 06) adjusted in each case for the execution of their processing procedures are arranged, wherein in the working space (01) a plurality of simultaneously handling devices (08) that are operated or at least can be operated simultaneously are provided, wherein every handling device (08) is provided in each case for transport of at least body (07) that has been or will be processed, wherein at least two handling devices (08) arranged in the same working space (01) and which are simultaneously operated or at least can be simultaneously operated are arranged vertically one above the other on different horizontal planes and are each moved horizontally or at least can be moved horizontally on their respective plane, wherein a movement path of the relevant handling device (08) provided for the transport of the bodies (07) that have been or will be processed is arranged on a vertical transport plane, wherein the vertical transport plane having the movement path of the relevant handling device (08) is arranged in each case lengthwise to the positions of the processing stations (02; 03; 04; 06) provided for processing the bodies (07), **characterized in that** the handling devices (08) are each moved or at least can be moved horizontally on their respective plane along a rail system.

2. The processing machine according to claim 1, **characterized in that** a body (07) to be processed preferably is conducted or at least can be conducted from a vertically lower position to the relevant processing station (02; 03; 04; 06) arranged at a vertically higher position than the relevant handling device (08).

3. The processing machine according to claim 1 or 2, **characterized in that** a plurality processing stations (02; 03; 04; 06) are each configured as a printing unit, wherein these printing unit are configured such that a body (07) fed to them is printed or at least can be printed in a screen-printing process or in a plateless printing process and/or that at least one of the processing stations (02; 03; 04; 06) is configured as a device for pre-processing or post-processing the respective bodies (07) in the form of a coating unit or as a dryer, in particular as a UV-dryer, or as a flame treatment system.

4. The processing machine according to claim 1 or 2 or 3, **characterized in that** the handling devices (08) arranged in the same working space (01) and simultaneously operated can each be moved bidirectionally.

5. The processing machine according to claim 1 or 2 or 3 or 4, **characterized in that** the respective handling device (08) is equipped with a receiving device for the respective the bodies (07) to be processed, wherein this receiving device is configured as format variable for receiving geometrically differently shaped bodies (07).

6. The processing machine according to claim 1 or 2 or 3 or 4 or 5, **characterized in that** a controller (11) is provided.

7. The processing machine according to claim 6, **characterized in that** the processing stations (02; 03; 04; 06) arranged in the working space (01) are each arranged at an infinitely selectable position, wherein at least one of the processing stations (02; 03; 04; 06) arranged in the working space (01) is adjusted or at least can be adjusted in each case by means of a positioning device controlled by the controller (11).

8. The processing machine according to claim 2 or 3 or 4 or 5 or 6 or 7, **characterized in that** for collision prevention the handling device (08) arranged in a lower of the planes arranged vertically one above the other is moved to a secure lower position and hence releases the way for a horizontal movement intersecting the movement path of the handling device (08) arranged in the lower of the planes arranged vertically one above the other in the upper of the planes arranged vertically one above the other.

9. The processing machine according to claim 6 or 7 or 8, **characterized in that** depending on the processing procedure to be executed a selection of at least two processing stations (02; 03; 04; 06) from the quantity of available processing stations (02; 03; 04; 06) is deployed by the controller (11), wherein the controller (11) moves the handling devices (08) only to the selected processing stations (02; 03; 04; 06).

10. The processing machine according to claim 8 or 9, **characterized in that** the respective movements of the plurality of handling devices (08) arranged in the same working space (01) to be executed along their movement path are then controlled by the controller (11) respectively in consideration of a phase shift between cyclically executed movement sequences of different handling devices (08) and/or of waiting times and/or of acceleration times or of deceleration times within these movement sequences of the handling devices (08).

11. The processing machine according to claim 6 or 7 or 8 or 9 or 10, **characterized in that** the controller (11) is in a data exchange with a production planning system (21), wherein a processing procedure to be carried out by the production planning system (21) of the controller (11) is specified.

12. The processing machine according to claim 1 or 2 or 3 or 4 or 5 or 6 or 7 or 8 or 9 or 10 or 11, **characterized in that** the handling devices (08) are each configured as a two-axis system, each being movable on a vertical transport plane.

13. The processing machine according to claim 1 or 2 or 3 or 4 or 5 or 6 or 7 or 8 or 9 or 10 or 11 or 12, **characterized in that** each handling device (08) is configured transporting only a single body (07).

14. The processing machine according to claim 1 or 2 or 3 or 4 or 5 or 6 or 7 or 8 or 9 or 10 or 11 or 12 or 13, **characterized in that** the respective active regions of the handling devices (08) involved in the provided processing procedure are configured spatially separate from one another.

15. The processing machine according to claim 1 or 2 or 3 or 4 or 5 or 6 or 7 or 8 or 9 or 10 or 11 or 12 or 13 or 14, **characterized in that** it is configured as a printing press or that it has at least one printing press.

## Revendications

1. Machine de traitement avec plusieurs postes de traitement (02 ; 03 ; 04 ; 06) destinée à traiter des corps (07), dans laquelle les postes de traitement (02 ; 03; 04; 06) prévus pour le traitement des corps (07) sont agencés dans un espace de travail (01) respectivement de façon à se suivre les uns derrière les autres en des positions différentes les unes des autres dans la direction de transport des corps (07) à traiter, dans laquelle la position respective des postes de traitement (02 ; 03 ; 04 ; 06) concernés est réglée pour l'exécution d'un processus de traitement déterminé, dans laquelle les positions respectives des postes de traitement (02 ; 03 ; 04 ; 06) respectivement réglées pour l'exécution de leur processus de traitement déterminé sont agencées dans un même plan horizontal dans l'espace de travail (01), dans laquelle un transport d'un corps (07) à traiter ou traité s'effectue d'un poste de traitement (02 ; 03 ; 04 ; 06) au suivant en-dessous du plan horizontal dans lequel les positions respectives des postes de traitement (02 ; 03 ; 04 ; 06) individuels respectivement réglées pour l'exécution de leur processus de traitement sont agencées, dans lequel plusieurs dispositifs de manipulation (08) entraînés simultanément ou au moins pouvant être entraînés simultanément sont prévus dans l'espace de travail (01), dans laquelle chaque dispositif de manipulation (08) est respectivement prévu pour le transport d'au moins un corps (07) à traiter ou traité, dans laquelle au moins deux des dispositifs de manipulation (08) agencés dans le même espace de travail (01) et entraînés simultanément ou au moins pouvant être entraînés simultanément sont agencés dans des plans horizontaux différents agencés les uns par-dessus les autres à la verticale et sont ou peuvent être respectivement déplacés à l'horizontale dans leur plan respectif, dans laquelle une bande de déplacement du dispositif de manipulation (08) concerné prévu pour le transport des corps (07) à traiter ou traités est agencée dans un plan de transport vertical, dans laquelle le plan de transport vertical qui présente la bande de déplacement du dispositif de manipulation (08) concerné est respectivement agencé le long des positions des postes de traitement (02 ; 03 ; 04 ; 06) prévus pour le traitement des corps (07), **caractérisé en ce que** les dispositifs de manipulation (08) dans leur plan respectif sont ou peuvent être respectivement déplacés à l'horizontale le long d'un système de rail.

2. Machine de traitement selon la revendication 1, **caractérisée en ce qu'**un corps (07) à traiter est ou au moins peut être respectivement rapproché d'une position verticale plus basse jusque contre le poste de traitement (02 ; 03 ; 04 ; 06) concerné agencé en une position verticale plus élevée que celle du dispositif de manipulation (08) concerné.

3. Machine de traitement selon la revendication 1 ou 2, **caractérisée en ce que** plusieurs postes de traitement (02 ; 03 ; 04 ; 06) sont respectivement conçus en tant que groupe d'impression, dans laquelle ces groupes d'impression sont conçus de telle sorte qu'avec eux un corps (07) qui leur est respectivement amené est ou au moins peut être imprimé dans un procédé de sérigraphie ou un procédé d'impression sans forme d'impression, et/ou **en ce qu'**au moins un des postes de traitement (02 ; 03 ; 04 ; 06) est conçu en tant que dispositif de pré-traitement ou de post-traitement des corps (07) respectifs sous la forme d'une unité de laquage ou d'un sécheur, en particulier un sécheur à UV, ou d'un dispositif d'inflammation.

4. Machine de traitement selon la revendication 1 ou 2 ou 3, **caractérisée en ce que** les dispositifs de manipulation (08) agencés dans le même espace de travail (01) et entraînés simultanément peuvent être respectivement déplacés de façon bidirectionnelle.

5. Machine de traitement selon la revendication 1 ou 2 ou 3 ou 4, **caractérisée en ce que** le dispositif de manipulation (08) respectif est doté d'un dispositif de réception pour le corps (07) respectif à traiter, dans laquelle ce dispositif de réception est conçu à format variable pour la réception de corps (07) à la géométrie différenciée.

6. Machine de traitement selon la revendication 1 ou 2 ou 3 ou 4 ou 5, **caractérisée en ce qu'**un dispositif de commande (11) est prévu.

7. Machine de traitement selon la revendication 6, **caractérisée en ce que** les postes de traitement (02 ; 03 ; 04 ; 06) agencés dans l'espace de travail (01) sont respectivement agencés en une position sélectionnable en continu, dans laquelle au moins un des postes de traitement (02 ; 03 ; 04 ; 06) agencés dans l'espace de travail (01) est ou au moins peut être respectivement réglé en étant commandé par le dispositif de commande (11) au moyen d'un dispositif de positionnement.

8. Machine de traitement selon la revendication 2 ou 3 ou 4 ou 5 ou 6 ou 7, **caractérisée en ce que** pour éviter une collision le dispositif de manipulation (08) agencé dans un plan inférieur des plans agencés les uns par-dessus les autres à la verticale est déplacé dans une position inférieure sûre, et libère ainsi le chemin pour un déplacement horizontal, qui croise la bande de déplacement du dispositif de manipulation (08) agencé dans le plan inférieur des plans agencés les uns par-dessus les autres à la verticale, du dispositif de manipulation (08) agencé dans le plan supérieur des plans agencés les uns par-dessus les autres à la verticale.

9. Machine de traitement selon la revendication 6 ou 7 ou 8, **caractérisée en ce que**, en fonction du processus de traitement à exécuter, une sélection d'au moins deux postes de traitement (02 ; 03; 04 ; 06) de l'ensemble des postes de traitement (02 ; 03; 04 ; 06) disponibles est mise en action par le dispositif de commande (11), dans laquelle les dispositifs de manipulation (08) sont déplacés par le dispositif de commande (11) uniquement vers les postes de traitement (02 ; 03 ; 04 ; 06) sélectionnés.

10. Machine de traitement selon la revendication 8 ou 9, **caractérisée en ce que** les déplacements respectifs, à exécuter le long de leur bande de déplacement respective et commandés par le dispositif de commande (11), de ces plusieurs dispositifs de manipulation (08) agencés dans le même espace de travail (01) sont respectivement commandés en tenant compte d'un décalage de phase entre des déroulements de mouvement exécutés de façon cyclique de dispositifs de manipulation (08) différents et/ou de temps d'attente et/ou de temps d'accélération ou de temps de freinage à l'intérieur de ces déroulements de mouvement des dispositifs de manipulation (08).

11. Machine de traitement selon la revendication 6 ou 7 ou 8 ou 9 ou 10, **caractérisée en ce que** le dispositif de commande (11) réalise un échange de données avec un système de planification de production (21), dans laquelle un processus de traitement à exécuter est prédéfini par le système de planification de production (21) du dispositif de commande (11).

12. Machine de traitement selon la revendication 1 ou 2 ou 3 ou 4 ou 5 ou 6 ou 7 ou 8 ou 9 ou 10 ou 11, **caractérisée en ce que** les dispositifs de manipulation (08) sont respectivement conçus en tant que système à deux axes respectivement déplaçable dans un plan de transport vertical.

13. Machine de traitement selon la revendication 1 ou 2 ou 3 ou 4 ou 5 ou 6 ou 7 ou 8 ou 9 ou 10 ou 11 ou 12, **caractérisée en ce que** chaque dispositif de manipulation (08) est respectivement conçu comme transportant uniquement un seul corps (07).

14. Machine de traitement selon la revendication 1 ou 2 ou 3 ou 4 ou 5 ou 6 ou 7 ou 8 ou 9 ou 10 ou 11 ou 12 ou 13, **caractérisée en ce que** les champs d'action respectifs des dispositifs de manipulation (08) associés au processus de traitement prévu sont conçus physiquement séparés les uns des autres.

15. Machine de traitement selon la revendication 1 ou 2 ou 3 ou 4 ou 5 ou 6 ou 7 ou 8 ou 9 ou 10 ou 11 ou 12 ou 13 ou 14, **caractérisée en ce qu'**elle est conçue en tant que machine à imprimer ou **en ce qu'**elle présente au moins une machine à imprimer.
